Europäisches Patentamt

European Patent Office

Office européen des brevets

(11) Publication number: **0 021 459**

**A1**

## (12) EUROPEAN PATENT APPLICATION

(21) Application number: **80200318.6**

(22) Date of filing: **09.04.80**

(51) Int. Cl.³: **F 04 D 25/04**
F 01 D 1/24, F 02 K 3/072
F 02 C 3/073

(30) Priority: **10.04.79 NL 7902799**
**10.04.79 NL 7902798**

(43) Date of publication of application:
**07.01.81 Bulletin 81/1**

(84) Designated Contracting States:
**BE DE GB**

(71) Applicant: **Bakker, Hendrik Janus**
**W. Schweitzerlaan 20**
**NL-6419 BB Heerlen(NL)**

(72) Inventor: **Bakker, Hendrik Janus**
**W. Schweitzerlaan 20**
**NL-6419 BB Heerlen(NL)**

(54) **Turbinedriven turbocompressor.**

(57) A turbinedriven turbocompresser is a multi-stage machine composed of a number of uncoupled concentrical work-wheels which within a common housing (1) between two stationary guiding-blade wheels (2 and 3) are alternately counterrotating and which are equipped with blade rings that in the row of wheels form corresponding flow passages for respectively both expansion (8-9) and compression (10-11). Flow directions for compression and expansion are opposite, stationary guiding-blade wheels as well as rotating work-wheels are constructed in the form of disks. The rotating wheels (4) and (6) are identical. Because of the low angular speeds of the rotating wheeldisks grease-filled spiral-groove bearings as well as gaslubricated bearings can be applied.

./...

Croydon Printing Company Ltd.

Fig 1

Fig. 2

- 1 -

A turbinedriven turbocompresser for a directly-fired heat-pump, as well as for jet-engines, and similar machines.

The invention relates to a turbinedriven turbocomprsser for
a directly-fired heat-pump, as well as for application in
jet-engines, turbochargers and similar machines.

The performance of turbochargers, gasturbines, jet-engines and,
above all, directly-fired turbocompression heat-pumps is closely
bound up with the energy-efficiencies within the turbinedriven
turbocompressers applied.

In comparison with corresponding reciprocating machinery the
above-mentioned turbomachines have many practical advantages,
such as: long life-span with little maintenance, practically
vibrationfree running, simple construction and small dimensions.
In addition energy-efficiencies in turbomachines prove to be
very high, at least with large machine-power. With smaller
machine-power efficiencies decrease substantially.

The overall efficiencies of turbinedriven turbocompressers of
very small power for application in directly-fired heat-pumps
for central heating of individual houses such as nowadays under
development, range from moderate to poor. The narrow flow-
passages in the machines give rise to unusually large flow
losses, while also the parasitic leakage- and disk-friction
losses become abnormally large as a result of the very small
machine-dimensions.

Many a turbinedriven turbocompresser of small power is composed of a single centrifugal impeller for compression on one shaft with a single or two-stage turbinewheel. In these machines an attempt has been made to limit flow losses by establishing the relatively wide flow-passages that go with extremely high angular speeds.

Another well-tried method for improving the efficiencies of small turbinedriven turbocompressers consists of the miniaturisation of existing large multi-stage machines, such as axial gasturbines on one single shaft as well as two-shaft radial Ljungström-turbines.

The above mentioned extremely high angular speed of small single-stage turbinedriven turbocompressers causes large problems with gas-lubricated bearings, and severe sealing problems. As a result of manufacturing problems the miniaturisation of large multi-stage turbomachines leads to coarse blade shapes, with rather moderate flow efficiency.

The invention aims at: turbinedriven turbocompressers with very high overall efficiency down to very small machine-power, at the same time avoiding very high angular speeds as well as coarse miniaturisation of flow blades. According to the invention this is achieved by regarding the work-shaft, which in the usual turbinedriven turbocompresser connects the compresser with the turbine, as fundamentally superfluous. According to the invention a turbinedriven turbocompresser has then necessarily to be a multi-stage machine composed of a number of uncoupled concentrical work-wheels which within a common housing between two stationary guiding-blade wheels are alternately counterrotating, and which are equipped with blade rings that in the row of wheels form corresponding flow-passages for respectively both expansion and compression. According to the invention the direction of flow through the blade rings for compression can be chosen opposite to that for expansion. In many practical cases this minimises leakage-losses, even with relatively large clearances in the machine. The large clearances give rise to very small disk friction losses. The flow losses in a turbinedriven turbocompresser in accordance with the invention are to be compared to those in a Ljungström-turbine, in which likewise all rotating blades are to be considered guiding blades at the same time. The flow losses in these machines are fundamentally low. With a sufficiently large number of uncoupled rotating wheels in the turbinedriven turbocompresser optimal blade-geometry is arrived at: flow efficiency is maximum. The overall efficiency of a turbinedriven turbocompresser according to the invention is to be compared to that of a hydrodynamic coupling, that is to say: extremely high.

The high overall efficiency of the turbinedriven turbocompresser in accordance with the invention is, as a result of the many degrees of freedom in the design of the machine, coupled with many other advantages. Guiding-blade wheels as well as uncoupled rotating wheels can, according to the invention, be constructed in the form of disks. The large number of uncoupled rotating wheels can in that case consist of identical pairs only. These simple disk-shaped wheels together with their identical bearing elements can easily be mass-produced. Finally as a result of the low angular

- 4 -

speeds of the rotating disks grease-filled spiral-groove bearings as well as gas-lubricated bearings can be applied.

One way of carrying out the invention is described in detail below with reference to drawings which illustrate two specific embodiments in which:

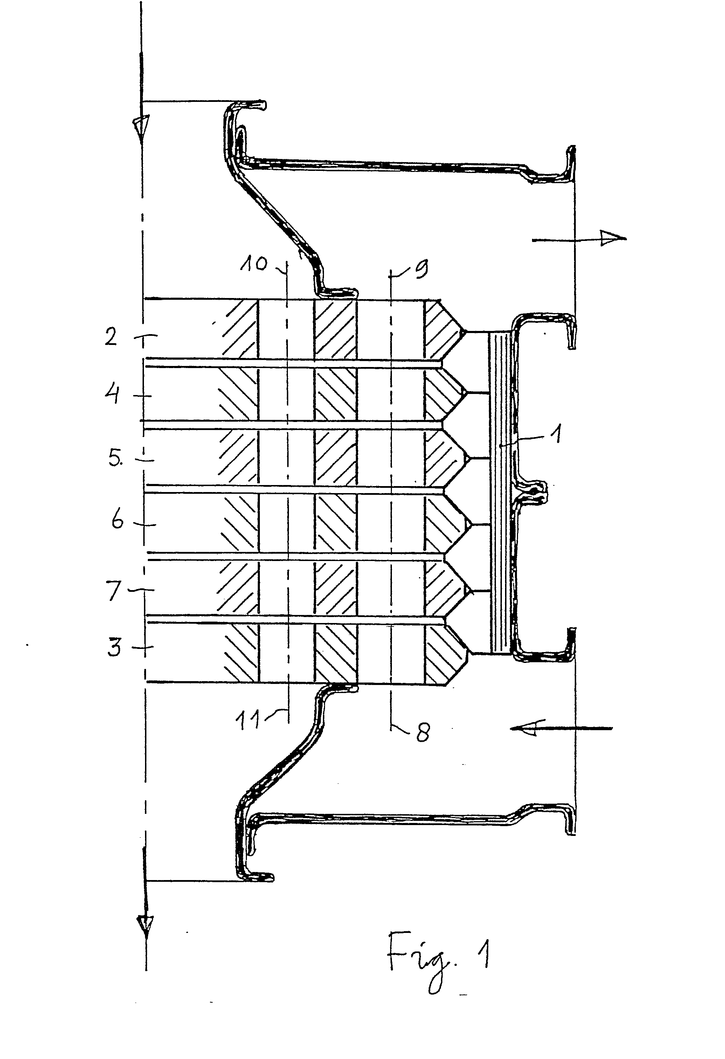

Figure 1 is a half-section of a turbinedriven turbocompresser in accordance with the invention comprising a number of uncoupled rotating wheels between ringshaped gasbearings.

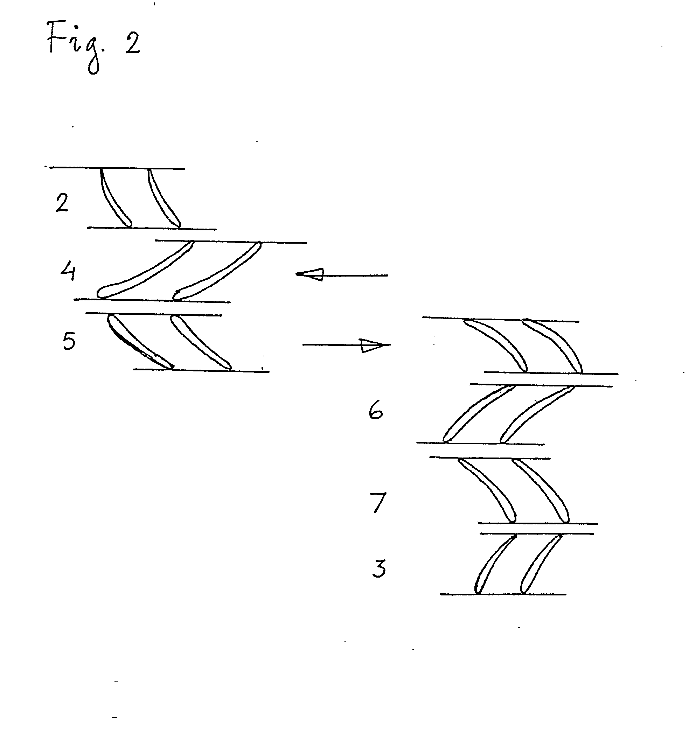

Figure 2 shows corresponding blade shapes for compression and expansion.

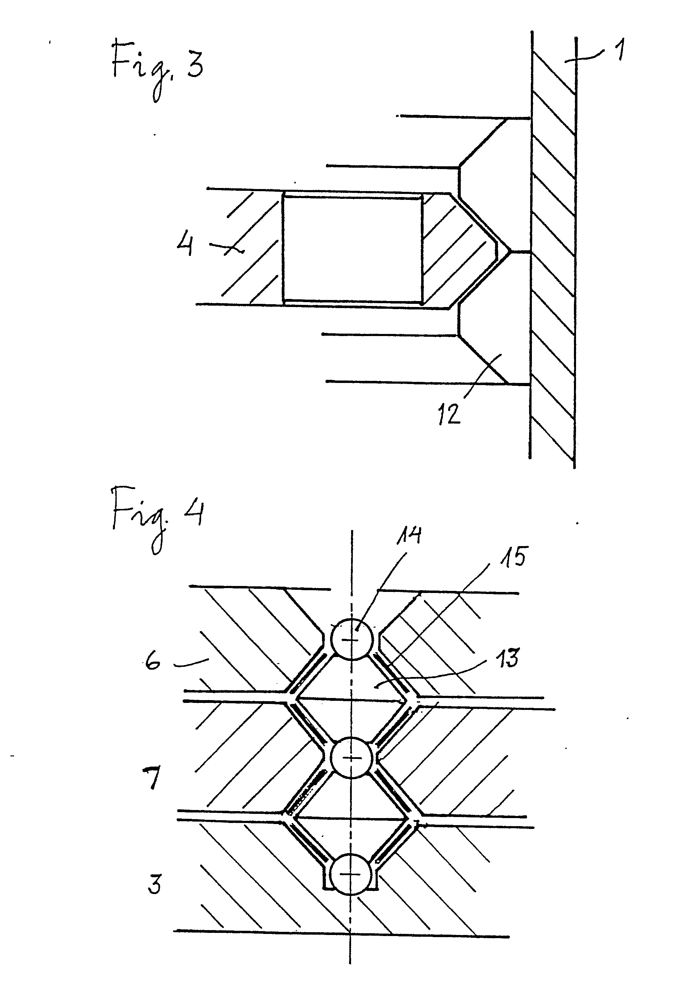

Figure 3 gives an enlarged detail of a ring-shaped gasbearing.
Figure 4 shows a disk-shaped grease-filled bearing element.

Together these figures give an idea of a turbinedriven turbocompresser according to the invention composed of a number of uncoupled concentrical work-wheels (4,5,6 and 7) which within a common housing (1) between two stationary guiding-blade wheels (2 and 3) are alternately counterrotating, and which are equipped with blade rings that in the row of wheels form corresponding flow passages for respectively both expansion (8-9) and compression (10-11). Flow directions for compression and expansion are opposite. Stationary guiding-blade wheels as well as rotating work-wheels are constructed in the form of disks. The rotating wheels (4) and (6) are identical; wheels (4) and (5), and likewise (6) and (7) are anti-symmetrical. The rotating wheeldisks are gas-lubricated between the bearing rings (12) which are centered in the housing (1) and locked up between the guiding-blade wheels (2 and 3).

According to the invention it is also possible to lubricate the rotating wheels (4,5,6 and 7) centrally between the smooth symmetrical bearing disks (13) locked between the guiding-blade wheels (2 and 3) and centered by means of the balls (14). Each bearing element (13) contains two free-rotating bearing rings (15) equipped with grease-filled spiral-grooves on either side.

- 1 -

Claims:

1. A turbinedriven turbocompresser for a directly-fired heat-pump, as well as for application in jet-engines, turbochargers, gasturbines and similar machines, characterised in that the turbinedriven turbocompresser is composed of a number of uncoupled concentrical work-wheels (4,5,6 and 7) which within a common housing (1) between two stationary guiding-blade wheels (2 and 3) are alternately counterrotating and which are equipped with blade rings that in the row of wheels form corresponding flow-passages for respectively both expansion (8-9) and compression (10-11).

2. A turbinedriven turbocompresser as claimed in claim 1, characterised in that the row of wheels contains several flow-passages for compression in series.

3. A turbinedriven turbocompresser as claimed in claim 2, characterised in that the main flow direction for compression (10-11) is opposite to the main flow direction for expansion (8-9).

4. A turbinedriven turbocompresser as claimed in claim 3, characterised in that stationary guiding-blade wheels ( 2 and 3) and rotating work-wheels (4,5,6 and 7) are constructed in the form of disks.

5. A turbinedriven turbocompresser as claimed in claim 4, characterised in that the rotating wheels consist of identical pairs only.

6. A turbinedriven turbocompresser as claimed in claim 5, characterised in that the wheels of a pair are anti-symmetrical.

7. A turbinedriven turbocompresser as claimed in claim 6, characterised in that the wheels alternate with and are locked up between
identical symmetrical conical bearing elements.

8. A turbinedriven turbocompresser as claimed in claim 7, characterised in that the bearing elements (12) are ring-shaped, centered in
the housing (1) and all together locked up between the guiding-blade
wheels (2 and 3).

9. A turbinedriven turbocompresser as claimed in claim 7, characterised in that the bearing elements are disk-shaped (13), alternate
with centering balls (14) and are together with these balls locked
up between the guiding-blade wheels (2 and 3).

10. A turbinedriven turbocompresser as claimed in claim 9, characterised in that a bearing element (13) contains two free-rotating
bearing rings (15) equipped with grease-filled spiral-grooves on
either side.

Fig. 1

Fig. 2

Fig. 3

1

4

12

Fig. 4

14

15

6

13

7

3

European Patent Office

**EUROPEAN SEARCH REPORT**

Application number

EP 80 20 0318

| Category | DOCUMENTS CONSIDERED TO BE RELEVANT | |
|---|---|---|
| | Citation of document with indication, where appropriate, of relevant passages | Relevant to claim |
| X | FR - A - 411 473 (MERIGOUX)<br><br>* The whole document * | 1-4,6-9 |
| X | GB - A - 588 092 (HOWELL)<br><br>* Page 3, lines 12 to 17 and 110 to 130; page 4, lines 1 to 7 * | 1-4,6,8,9 |
| X | US - A - 2 391 779 (GRIFFITH)<br><br>* Page 1, left-hand column, lines 1-10; page 1, right-hand column, lines 3-34 * | 1-8 |
| X | GB - A - 586 435 (POWER. JETS)<br><br>* Page 2, line 76 to page 3, line 45; page 3, lines 93-105 and lines 118-123 * | 1-4,6,8 |
| | GB - A - 585 331 (GRIFFITH)<br><br>* The whole document * | 1-4,6,8 |
| A | FR - A - 2 102 467 (RYLEWSKI) | |
| A | DE - C - 181 147 (STOLZE + BARKOW) | |
| A | DE - A - 2 507 512 (D.F.V.L.R.) | |

**CLASSIFICATION OF THE APPLICATION (Int Cl.)**

F 04 D 25/04
F 01 D 1/24
F 02 K 3/072
F 02 C 3/073

**TECHNICAL FIELDS SEARCHED (Int.Cl.3)**

F 02 C
F 02 K
F 01 D
F 04 D

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| THE HAGUE | 18-07-1980 | IVERUS |

EPO Form 1503.1 06.78